# EUROPÄISCHE PATENTSCHRIFT

(11) **EP 0 673 297 B1**
(45) Veröffentlichungstag und Bekanntmachung des Hinweises auf die Patenterteilung: **20.05.1998**
(21) Anmeldenummer: 94901744.6
(22) Anmeldetag: 10.12.1993
(51) Int. Cl.: B23Q 7/14, B23Q 16/02

(54) **WERKSTÜCKTRÄGER-POSITIONIERVORRICHTUNG**
WORKPIECE HOLDER POSITIONING DEVICE
DISPOSITIF DE POSITIONNEMENT DE PORTE-PIECES

(30) Priorität: 10.12.1992 DE 4241676
(43) Veröffentlichungstag der Anmeldung: 27.09.1995
(73) Patentinhaber: FRAUNHOFER-GESELLSCHAFT ZUR FÖRDERUNG DER ANGEWANDTEN FORSCHUNG E.V., 80636 München (DE)
(72) Erfinder: EGNER, Harald, D-74321 Bietigheim/Bissingen (DE); HOFFMANN, Jürgen, D-73760 Ostfildern (DE)
(86) Internationale Anmeldenummer: DE9301182
(87) Internationale Veröffentlichungsnummer: WO9413431

(56) Entgegenhaltungen:
- DE-A- 2 537 999
- DE-A- 2 851 699
- US-A- 2 789 683
- PATENT ABSTRACTS OF JAPAN vol. 6, no. 146 (M-147)(1024) 5. August 1982 & JP,A,57 066 842 (SHINOHARA) 23. April 1982

## Beschreibung

Die Erfindung bezieht sich auf ein Verkettungssystem gemäß des Oberbergriffes des Anspruchs 1.

Verkettungsysteme, bei denen die einzelnen Bearbeitungsstationen beispielsweise durch Förderbänder oder Doppelgurtsysteme lose verkettet sind, haben gegenüber Rundschalttischen den Vorteil, daß die einzelnen Bearbeitungsstationen entkoppelt sind, so daß sich eine hohe Flexibilität bezüglich des Auf- und Umbaus der Anlage ergibt. Hinzukommt, daß die Ausbringungsrate der lose miteinander verketteten Bearbeitungsstationen deutlich höher liegt als bei Rundschalttischen, zumal durch die lose Verkettung Zwischenspeichersysteme vorieht, so daß die Arbeitstakte jeder einzelenen Bearbeitungsstationen nicht in einem festen Verhältnis zueinander stehen müssen.

Nachteilig ist jedoch, daß bei einer ausschließlichen Verkettung durch lose Verkettungssysteme die Positioniergenauigkeit und die Wiederholgenauigkeit sowie die Positionierzeit zwischen zwei Positionen deutlich geringer als bei Rundschalttischen ist, da nicht zuletzt die zu transportierenden Werkstücke lose auf Transportbändern liegen und ein Verrutschen der Werkstücke auf den Bändern bei größeren Beschleunigungen möglich ist. Hinzukommt, daß die Walzenlänge lang genug ausgebildet sein muß, um die Positionierung im gesamten Arbeitsbereich zu gewährleisten. Dieses Erfordernis führt jedoch zu langen Baulängen der Walzen und somit zu einem hohen Platzbedarf.

Es ist verschiedentlich vorgeschlagen worden, in den Bearbeitungsstationen Positioniervorrichtungen für die Werkstückträger zu verwenden, die eine schnelle und exaktere Positionierung mit höherer Wiederholgenauigkeit als bei losen Verkettungssystemen gewährleisten.

Beispielhaft wird hierzu auf die WO 89/10234, die US-PS 532 869 oder die europäischen Offenlegungsschriften 248 904 und 424 562 verwiesen.

Beispielsweise die EP-A 424 562 beschreibt einen Palettenwechsler für einen linearen Horizontalförderer, bei dem als Antriebselement zwischen den einzelnen Bereitstellungspositionen ein angetriebener Doppelgurt und als Positioniervorrichtung in der jeweiligen Bearbeitungsstation eine Walze vorgesehen sind. Die Walze weist eine zur jeweiligen Walzenstirnsteite offene wendelförmige Führungsnut auf, in die ein an der jeweiligen Palette angeordnetes Führungselement eingreift.

Nachteilig bei dieser bekannten Werkstückträger-Positionier-Vorrichtung ist jedoch, daß der Werkstückträger prinzipiell nicht spielfrei in der Nut der Walze geführt werden kann, so daß die Positioniergenauigkeit und vor allem die Wiederholgenauigkeit für manche Anwendungsfälle nicht ausreichen.

Eine verbesserte Positionier- und Führungsgenauigkeit ist mit einer Positionierspindel nach Hütte zu realisieren (Akademischer Verein Hütte, e.V. Berlin, "Hütte", Teil A, 28. Aufl., 1954 Verlag von Wilhelm Ernst & Sohn, Berlin S. 311, 312), die eine erhabene Steigung aufweist, an deren Außenkontur zwei sich gegenüberstehende Kurvenrollen abgleiten.

Ebenso geht aus der DE-AS 2 048 246 eine Förder- und Einstellvorrichtung hervor, die einen Kurvenzylinder mit erhabener Steigung vorsieht zum intermittierenden Positionieren von Förderpaletten. Durch Eingriff der an der Unterseite der Förderpaletten angebrachten Mitnehmerrollen in die sich drehenden Kurvenzylinder werden die Förderpaletten in eine Richtung parallel zur Kurvenzylinderachse fortbewegt. Voraussetzung für den kontrollierten Vorschub jeder einzelnen Förderpalette ist das unmittelbare Aneinanderstoßen der einzelnen Paletten. Eine vereinzelte Fortbewegung der Förderpaletten ist mit diesem System nicht möglich.

Ausgehend von einem Stand der Technik gemäß Oberbegriff von Anspruch 1, der durch die DE-AS 2 048 246 gebildet ist, liegt der Erfindung die Aufgabe zugrunde, ein gattungsgemäßes Verkettungssystem anzugeben, das eine höchstpräzise Positionierung einzelner Werkstückträger gestattet, bei möglichst kostengünstigem Aufbau und der Möglichkeit variabler Einsatzmöglichkeiten, d. h. das Verkettungssystem soll möglichst modular an die unterschiedlichsten Arbeitsplatzverhältnisse anpassbar sein. Überdies soll das Verkettungssystem kompakt und platzsparend ausgebildet sein.

Eine erfindungsgemäße Lösung dieser Aufgabe ist im Patentanspruch 1 angegeben. Weiterbildungen der Erfindung sind Gegenstand der Unteransprüche.

Das erfindungsgemäße Verkettungssystem mit wenigstens zwei nacheinander angeordneten Werkstückträger-Positioniervorrichtungen, insbesondere für Bearbeitungsstationen mit wenigstens zwei ortsfesten Spindeln, die zum Positionieren eines Werkstückträgers von einer Antriebseinheit getaktet gedreht werden sowie mit Werkstückträgern, die Rollen aufweisen, die beim Postionieren mit der Spindel in Eingriff stehen, ist derart ausgestaltet, daß die Werkstückträger wenigstens zwei Rollenpaare aufweisen, die so angeordnet sind, daß während ein Rollenpaar eines Werkstückträgers noch in eine Spindel eingreift, ein anderes Rollenpaar des gleichen Werkstückträgers schon in die nächste Spindel eingreift.

Die Rollen-Paare laufen dabei auf den Seitenflächen der erhabenen Spindelkontur ab, wodurch eine weitgehend spielfreie Positionierung möglich ist. In der realen Umsetzung bietet es sich an, die Spielfreiheit nur an der exakten Positionierstelle vorzunehmen (Anspruch 2), so daß die Kosten für die Herstellung der Spindel verringert werden.

Hierdurch ergibt sich eine hohe Positioniergenauigkeit, bei der die Positionierfehler durch die spielfreie Führung der Kurvenrollen-Paare an der erhabenen Kontur der Spindel auf Werte <± 0,01 mm reduziert werden kann. Weiterhin sind kurze Positionierzeiten in der Größenordnung von 0,3 Sekunden möglich.

Vor allem aber ist eine freie Wahl der Taktvorschublängen möglich, so daß je nach Wunsch ein Einfach-, ein Zweifach- oder ein Mehrfachtakt durch entsprechende Wahl der Zahl der Rollen realisiert werden kann.

Da die Spindel lediglich eine einzige Steigung aufweist, ist die Postioniergenauigkeit bei einem Takten über eine größere Strecke lediglich durch die Genauigkeit der Positionierung des jeweiligen im Eingriff befindlichen Kurvenrollenpaares bestimmt, so daß kein Aufsummieren von Fertigungsfehlern auftritt, wie dies bei einer langen Spindel mit mehreren Steigungen am Umfang der Fall ist. Auch lassen sich Zwischenhübe durch verschiedene Zwischenpositionen an der Spindel realisieren (Anspruch 5).

Letztlich können die Spindeln mit bekannten Techniken kostengünstig gefertigt werden: So kann die Spindel beispielsweise durch einen Präzisions-Schleifvorgang hergestellt und zusätzlich gehärtet werden.

Längere Taktstrecken lassen sich durch die Aneinanderreihung mehrerer Spindeln realisieren, die nicht durch ein loses Verkettungssystem verbunden sind, sondern zwischen denen eine "direkte Übergabe" des jeweiligen Werkstückträgers dergestalt erfolgt, daß Kurvenrollen sowohl in die eine als auch die andere Spindel eingreifen.

In jedem Falle ist es besonders vorteilhaft, wenn zur Steuerung der Antriebseinheit ein Geber und insbesondere ein induktiver Geber vorgesehen ist, der die Position des Werkstückträgers erfaßt und dessen Ausgangssignal an der Antriebseinheit anliegt.

Die erfindungsgemäße Vorrichtung kann leicht an die unterschiedlichsten Positionierprobleme dadurch angepaßt werden, daß die Spindelsteigung und/oder der Durchmesser der Kurvenrollen variiert wird.

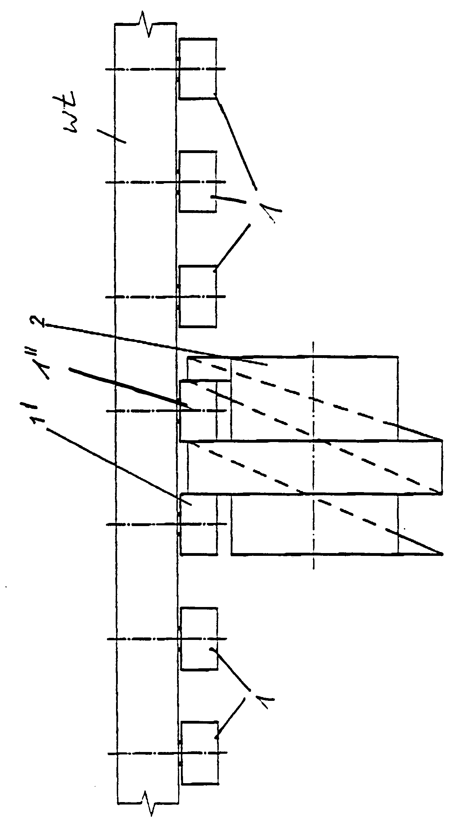

Die Erfindung wird nachstehend anhand der Zeichnung näher beschrieben, deren einzige
Figur eine Seitenansicht einer erfindungsgemäßen Positioniervorrichtung zeigt.

In der Figur ist ein Werkstückträger wt dargestellt, der durch eine nicht gezeigte Führung seitlich geführt wird. An der Unterseite des Werkstückträgers wt sind mehrere Rollen angeordnet, von denen in der Figur sieben zu sehen sind. Die in Bearbeitungsrichtung hintereinander angeordneten Rollen haben einen Abstand, der dem Takt einer Spindel 2 entspricht, die unter dem Werkstückträger wt ortsfest gelagert ist. Der erhabene Teil der Antriebsspindel 2 läuft durch jeweils ein Rollenpaar 1' und 1'' des Werkstückträgers wt. Achs-parallel unter der Antriebsspindel 2 ist eine nichtdargestellte Antriebseinheit angeordnet, die beispielsweise über einen Zahnriemen die Spindel 2 antreibt.

Ferner kann ein Geber und insbesondere ein induktiver Geber vorgesehen sein, der die Schaltposition der Antriebsspindel erfaßt. Hierdurch kann die Antriebseinheit sicher angesteuert werden. Eine geeignete Motorsteuerung ermöglicht es, den Nachlauf der Antriebseinheit gering zu halten. Hierzu ist es bevorzugt, wenn das Zahnriemengetriebe mit dem Übersetzungsverhältnis von 1:1 arbeitet, so daß die Antriebsspindel 2 bei einer Motorumdrehung nur eine Umdrehung umläuft, und so der Nachlauf gering ist.

## Patentansprüche

1. Verkettungssystem mit wenigstens zwei nacheinander angeordneten Werkstückträger-Positioniervorrichtungen, insbesondere für Bearbeitungsstationen mit wenigstens zwei ortsfesten Spindeln (2), die zum Positionieren eines Werkstückträgers (wt) von einer Antriebseinheit getaktet gedreht werden sowie mit Werkstückträgern (wt), die Rollen aufweisen, die beim Postionieren mit der Spindel (2) in Eingriff stehen,
dadurch **gekennzeichnet**, daß die Werkstückträger (wt) wenigstens zwei Rollenpaare (1 und 1',1'') aufweisen, die so angeordnet sind, daß während ein Rollenpaar (1',1'') eines Werkstückträgers (wt) noch in eine Spindel (2) eingreift, ein anderes Rollenpaar (1) des gleichen Werkstückträgers (wt) schon in die nächste Spindel (2) eingreift.

2. Verkettungssystem nach Anspruch 1,
dadurch **gekennzeichnet**, daß die Spindel eine hochgenaue Spindel ist, in der die Rollen spielfrei ablaufen.

3. Verkettungssystem nach Anspruch 1 oder 2,
dadurch **gekennzeichnet**, daß die Spindel präzisionsbearbeitet, beispielsweise geschliffen und/oder gehärtet ist.

4. Verkettungssystem nach einem der Ansprüche 1 bis 3,
dadurch **gekennzeichnet**, daß zur Realisierung einer langen Taktstrecke mehrere Spindeln nacheinander angeordnet sind.

5. Verkettungssystem nach einem der Ansprüche 1 bis 4,
dadurch **gekennzeichnet**, daß die Antriebseinheit so aufgebaut ist, daß zusätzlich zu einem Taktvorschub ein Vielfaches und/oder Bruchteile eines Taktvorschubes realisierbar sind.

6. Verkettungssystem nach einem der Ansprüche 1 bis 5,
dadurch **gekennzeichnet**, daß zur Realisierung unterschiedlicher Taktstrecken die Spindelsteigung und/oder der Durchmesser der Rollen variiabel sind.

7. Verkettungssystem nach einem der Ansprüche 1 bis 6,
dadurch **gekennzeichnet**, daß ein Geber vorgesehen ist, der die Position des Werkstückträgers erfaßt, und dessen Ausgangssignal an der Antriebseinheit anliegt.

8. Verkettungssystem nach Anspruch 7,
dadurch **gekennzeichnet**, daß der Geber ein induktiver Geber ist.

## Claims

1. An interlocking system having at least two workpiece holder positioning devices disposed in succession, in particular for processing stations having at least two stationary spindles (2) which are rotated in a clocked manner by a drive unit for positioning a workpiece holder(wt) as well having workpiece holders (wt) which are provided with rollers which engage with said spindles (2) in positioning,
**characterized by** the fact that said workpiece holders (wt) are provided with at least two pairs of said rollers (1 and 1', 1'') which are disposed in such a manner that while one pair of rollers (1', 1'') of a workpiece (wt) still engages with one spindle (2), another pair of rollers (1) of the same workpiece holder (wt) already engages with the next spindle (2).

2. An interlocking system according to claim 1,
**characterized by** the fact that said spindle is a high precision spindle in which the rollers run off free of play.

3. An interlocking system according to claim 1 or 2,
**characterized by** the fact that said spindle is precision tooled, by way of illustration polished and/or hardened.

4. An interlocking system according to one of the claims 1 to 3,
**characterized by** the fact that for realization of a long clocked path several spindles are disposed in succession.

5. An interlocking system according to one of the claims 1 to 4,
**characterized by** the fact that said drive unit is set up in such a manner that in addition to one clocked feed a multiplicity and/or fraction of a clocked feed can be realized.

6. An interlocking system according to one of the claims 1 to 5,
**characterized by** the fact that in order to realize different clocked paths, the gradient of said spindle and/or the diameter of said rollers are variable.

7. An interlocking system according to one of the claims 1 to 6,
**characterized by** the fact that a control is provided which determines the position of said workpiece holder and applies its output signal to said drive unit.

8. An interlocking system according to claim 7,
**characterized by** the fact that said control is an inductive control.

## Revendications

1. Système d'enchaînement avec au moins deux dispositifs de positionnement de porte-pièces disposés consécutivement, en particulier pour les postes d'usinage avec au moins deux broches à demeure (2), qui sont mis en rotation de façon synchronisée pour le positionnement d'un porte-pièces (Wt) par une unité d'entraînement ainsi qu'avec des porte-pièces (Wt) qui comportent des rouleaux et qui entrent en action avec la broche (2) pour le positionnement,
caractérisé en ce que les porte-pièces (Wt) comportent au moins deux paires de rouleaux (1 et 1', 1'') qui sont disposées de telle sorte que pendant qu'une paire de rouleaux d'un porte-pièces (Wt) est encore en engrènement avec une broche (2), une autre paire de rouleaux (1) du même porte-pièces (Wt) engrène déjà la broche suivante (2).

2. Système d'enchaînement selon la revendication 1,
caractérisé en ce que la broche est une broche haute précision dans laquelle les rouleaux tournent sans jeu.

3. Système d'enchaînement selon la revendication 1 ou 2,
caractérisé en ce que les broches ont subi un usinage de précision, par exemple un meulage et/ou une trempe.

4. Système d'enchaînement selon l'une des revendications 1 à 3,
caractérisé en ce que pour la réalisation d'une longue course synchronisée, plusieurs broches sont disposées les unes derrière les autres.

5. Système d'enchaînement selon l'une des revendications 1 à 4,
caractérisé en ce que l'unité d'entraînement est conçue de telle sorte qu'en plus de l'avance synchronisée, il sera possible de réaliser un multiple et/ou des fractions d'une avance synchronisée.

6. Système d'enchaînement selon l'une des revendications 1 à 5,
caractérisé en ce que pour réaliser différentes courses synchronisées, le pas des broches et/ou le diamètre des rouleaux sont variables.

7. Système d'enchaînement selon l'une des revendications 1 à 6,
caractérisé en ce qu'il est prévu un capteur qui saisit la position du porte-pièces et transmet son signal de sortie à l'unité de commande.

8. Système d'enchaînement selon la revendication 7,
caractérisé en ce que le capteur est un capteur par induction.
